# EUROPEAN PATENT SPECIFICATION

(11) **EP 3 961 760 B1**
(45) Date of publication and mention of the grant of the patent: **18.03.2026**
(21) Application number: 19926643.8
(22) Date of filing: 22.06.2019
(51) Int. Cl.: H01M 4/04, H01M 4/134, H01M 4/1395, H01M 4/38, H01M 4/62, H01M 10/052, H01M 10/0568, H01M 10/0569, H01M 4/02

(54) **LITHIUM METAL NEGATIVE ELECTRODE AND MANUFACTURING METHOD THEREFOR, AND LITHIUM BATTERY USING NEGATIVE ELECTRODE**
LITHIUM-METALL-NEGATIVELEKTRODE UND HERSTELLUNGSVERFAHREN DAFÜR SOWIE LITHIUMBATTERIE MIT VERWENDUNG DER NEGATIVELEKTRODE
ÉLECTRODE NÉGATIVE AU LITHIUM MÉTALLIQUE ET SON PROCÉDÉ DE FABRICATION, ET BATTERIE AU LITHIUM UTILISANT L'ÉLECTRODE NÉGATIVE

(30) Priority: 25.04.2019 CN 201910341520
(43) Date of publication of application: 02.03.2022
(73) Proprietor: Zhejiang Funlithium New Energy Tech Co., Ltd., Ningbo, Zhjiang 315040 (CN)
(72) Inventor: CUI, Yanming, Ningbo, Zhejiang 315040 (CN); LIU, Zhangbo, Ningbo, Zhejiang 315040 (CN); XU, Xiaoxiong, Ningbo, Zhejiang 315040 (CN); HUANG, Yuanqiao, Ningbo, Zhejiang 315040 (CN)
(74) Representative: Santarelli
(86) International application number: PCT/CN2019/092437
(87) International publication number: WO 2020/215474

(56) References cited:
- WO-A1-2008/045557
- WO-A1-2011/008742
- CN-A- 103 329 334
- CN-A- 105 006 592
- CN-A- 105 006 592
- CN-A- 107 665 977
- CN-A- 107 665 977
- CN-A- 108 767 250
- US-A1- 2014 093 774
- US-A1- 2014 093 774
- US-A1- 2015 037 672

## Description

### Technical Field

The present invention relates to a lithium battery, and in particular to a lithium metal negative electrode, a preparation method thereof, and a lithium battery using the negative electrode.

### Background Art

Since Sony has developed commercial lithium ion batteries using graphite negative electrodes with an intercalation reaction as a mechanism, the lithium ion batteries have developed rapidly. However, commercial lithium ion batteries with graphite as the negative electrode are difficult to meet the requirements for long battery life. With the development of lithium-ion batteries, lithium metal negative electrodes with a theoretical capacity ten times larger than that of traditional graphite negative electrodes and a lower minimum negative potential has become a current hot research area in lithium metal batteries.

The existing lithium metal batteries that have been successfully practically applied on the market, have relatively small energy density and the current density, are used in nearly 4,000 Bluecars for the Paris car-sharing service "Autolib". This is first commercial lithium metal battery for EVs (Electric Vehicle) in the world, which has an energy density of only 170 wh/kg, and in order to increase the operating current, the operating temperature of the lithium metal battery needs to be as high as 80°C. In addition, the reasons for restricting the popularization of lithium metal batteries with a high energy and a high power density include: due to the limited lithium deposition sites on the surface of the existing lithium metal negative electrodes and a relatively large local current, during charging and discharging, especially in the case of high current charging, of the lithium metal battery, lithium is nonuniformly deposited on the surface of the lithium metal negative electrode, which easily produces lithium dendrites that will further puncture the separator, causing failure or safety problems of the battery, furthermore, some of the dendrites will detach away to form unusable "dead lithium", resulting in a decrease in the Coulomb effect.

In the prior art, with regard to suppression of the growth of lithium dendrites on a lithium metal negative electrode, the main concern is to form a more stable lithium metal/electrolyte interface or use a physical barrier layer to suppress dendritic growth. However, the above methods can only work effectively at a low areal capacity density (0.5-1.0 mAh/cm²) and a low current density ( < 0.5mA/cm²), and when facing the preparation and research of batteries with a high energy and a high power density, the methods have a limited effect.

At the same time, conventional lithium metal foil negative electrodes provide a limited electron/ion reaction area during discharging and cannot withstand higher current discharging, limiting the upper energy power limit and energy density of lithium metal batteries; conventional lithium metal foil negative electrodes are subject to very large expansion and contraction during the cyclic charging/discharging of lithium metal batteries, which is not conducive to the high cycle stability of lithium metal foil negative electrodes and their application in solid-state batteries, etc.; due to high activity and ductility, the conventional lithium metal foil negative electrodes are inconvenient for an ultra-thin processing; moreover, the conventional lithium metal negative electrodes do not have any absorption effect on an electrolyte, and the electrolyte is excessively absorbed by a positive electrode during long-term storage, resulting in uneven distribution of the electrolyte in the battery, which are not conducive to battery storage and high temperature performance. The above problems have resulted in the current situation that the popularization of lithium metal batteries with a high energy and a high power density is restricted.

Gel electrodes are known to enhance the safety and stability of lithium batteries and reduce dendrite formation. The International patent application WO 2011/008742 relates to polymer-based electrolytes (both solid polymer electrolytes (SPEs) and polymer matrix electrolytes (PMEs)) that incorporate lithium salts and solvents into the polymer matrix for ionic conduction. These materials are used in both the anode and separator layers, with specific attention given to polymer gel electrolytes. Patents applications CN105006592 A and CN 108767250 also mention gel electrolyte compositions. Specifically WO 2011/008742 discloses a lithium battery negative electrode wherein the active material layer is formed from a lithium formulation comprising a solvent, at least a lihium salt, and about 20 to 50% lithium metal powder, about 15 to 40% conductive material and about 10 to 25% polyimide binder on a dry weight basis.

### Summary of the Invention

The invention is defined by the appended claims.

In view of the shortcomings in the prior art, a first object of the present invention is to provide a lithium metal negative electrode, which greatly increases the areal capacity and electron/ion reaction area of the lithium metal negative electrode, thereby increasing the high energy performance of the lithium metal battery, which meet the requirements of lithium metal batteries for a high energy and a high power density.

The above technical object of the present invention is achieved by the following technical solution:
a lithium metal negative electrode, comprising a current collector and a lithium paste layer covered on one side of the current collector, wherein the current collector is an inert conductive material, the lithium paste layer is obtained by coating a pasty lithium paste, and the lithium paste is formed by mixing the following raw materials in parts by mass:
10-60 parts of a lithium powder,
10-20 parts of a thickener, and
30-80 parts of an electrolyte, wherein
the volume equivalent diameter of the lithium powder is 1-30 µm,
the electrolyte is formulated by mixing a lithium salt and an organic solvent, the concentration of the lithium salt in the electrolyte is 0.5 mol/L-5 mol/L, and the organic solvent does not react with the lithium powder or the lithium salt.

According to the technical solution described above, the lithium paste obtained by mixing lithium powder particles with a high specific surface area, a thickener, and an electrolyte is uniformly applied on the surface of the current collector material to form a lithium paste layer, in which the lithium powder particles serve as a electron-losing material during the negative electrode discharging, the lithium powder particles are uniformly dispersed in the lithium paste by being wrapped by the thickener and electrolyte and the lithium powder particles have a high dispersion density, thus greatly improving the areal capacity and electron/ion reaction area of the lithium metal negative electrode, then improving the high energy performance of the lithium metal batteries, which meet the requirements of lithium metal batteries for a high energy and a high power density.

At the same time, the lithium powder particles are not fixed to each other, i.e., during the charging and discharging of the lithium metal battery, according to the distribution of the lithium powder particles and the size of the lithium powder particles, the lithium powder particles are move adaptively and change the distribution according to the surface lithium lamination and ablation of the lithium powder particles and the local current distribution of the lithium metal negative electrode in the lithium paste layer, then increasing the lithium deposition site during charging of the lithium metal battery using the lithium metal negative electrode of the present application, and reducing the local current density of the lithium metal negative electrode, thereby reducing the growth rate of lithium dendrites, and therefore, the reduction of the coulombic efficiency is slowed down for the lithium metal negative electrode of the present application after long-term use, and the cycle efficiency and safety performance are improved for the lithium metal battery using the lithium metal negative electrode of the present application.

During the cyclic charging and discharging of lithium metal batteries, the existing lithium metal negative electrodes will expand and contract due to lithium metal deposition/precipitation, which will damage the cycle stability of the lithium metal negative electrode, and at the same time, for the lithium metal solid battery, the expansion and contraction of the lithium metal negative electrode will further damage the bond between the lithium metal negative electrode and the solid-state electrolyte, and reduce the cycle efficiency of the lithium metal solid battery. In the present application, the lithium paste layer is obtained by covering a current collector with a lithium paste, and the lithium paste includes a thickener, a liquid electrolyte and non-fixed lithium powder particles, such that the lithium paste layer has a deformability and a good fluidity. The lithium paste layer can be deformed during the cyclic charging and discharging of the lithium metal battery for buffering, so as to slow down the expansion and contraction and improve the cycle stability of the lithium metal negative electrode, and when applied in lithium metal solid-state batteries, the lithium paste layer can maintain a good contact with the solid electrolyte to improve the application effect of the lithium metal negative electrode of the present application in the lithium metal solid-state battery and facilitate the popularization and use of lithium metal solid-state batteries.

Compared with the limited ductility and high activity of the lithium foil in the existing lithium metal negative electrodes, the fluidity of the lithium paste layer enables the lithium metal negative electrode of the present application to avoid the problems that when being ultra-thin processed, the existing lithium foil negative electrode has a decreased flatness, becomes sticky and difficult to assemble and use after the thickness of the lithium foil is reduced, and the thickness of the lithium paste layer is small and controllable, improving the production efficiency and reducing production costs, and increasing the mass energy density and bulk energy density of the lithium metal batteries using the lithium metal anode of the present application.

In addition, the lithium powder particles and thickener in the lithium paste have a certain liquid retention capacity for the electrolyte, which can ensure the electrolyte to wet and contact with the lithium metal during the storage process, prevent excessive absorption of the electrolyte by the lithium metal battery during long-term storage, promotes the uniform distribution of the electrolyte in the battery and improves the storage performance of the lithium metal battery.

The present invention is further provided as follows: the lithium salt is one or more of LiN(SO₂CF₃)₂, LiNO₃, LiAsF₆, LiPF₆, Lil, LiBF₄, LiClO₄, LiSO₂CF₃, and LiB(C₂O₄)₂.

The present invention is further provided as follows: the organic solvent is one or more of propylene carbonate, ethylene carbonate, fluoroethylene carbonate, diethyl carbonate, dimethyl carbonate, methyl ethyl carbonate, 1,3-dioxolane, dimethyl carbonate, dimethyl sulfoxide, and tetrahydrofuran.

According to the technical solution described above, the organic solvent is used as a carrier for dissolving and dispersing the lithium salt, and also as a film-forming aid of the lithium paste, which improves the film formability of the lithium paste and facilitates the ultra-thin processing of the lithium paste layer, such that the lithium metal battery using the present negative electrode can obtain more battery cell number, laminating times or winding times per unit mass or unit volume, so as to improve the mass energy density and volume energy density of the lithium metal battery using the lithium metal negative electrode of the present application. In addition, the addition of fluoroethylene carbonate can also inhibit the decomposition of the electrolyte, reduce the interface impedance, and increase the energy power of the lithium metal battery.

The present invention is further provided as follow: the thickener comprises one or more of fumed silica, organic bentonite, a polyethylene wax, a polyamide wax or hydrogenated sesame oil.

According to the technical solution described above, the above thickener can increase the consistency of the electrolyte, prevent the sedimentation of lithium powder particles, and avoid the liquid separation and delamination of lithium paste, and the addition of the above thickener can also modify the surface of lithium powder particles in situ to improve the compatibility of lithium powder particles with the organic solvent, and promote uniform dispersion of lithium powder particles in the lithium paste.

The present invention is further provided as follow: the thickness of the lithium paste layer is 5-60 µm.

According to the technical solution described above, the processing thickness of the lithium paste layer is small, which can reduce the production cost, and is beneficial to improve the mass energy density and volume energy density of the lithium metal battery using the lithium metal negative electrode of the present application.

In view of the shortcomings of the prior art, a second object of the present invention is to provide a method for preparing the lithium metal negative electrode, which ensures that the lithium powder is uniformly mixed in the lithium paste and prevents the lithium paste from liquid separation and delamination.

The above technical object of the present invention is achieved by the following technical solution:
a method for preparing the lithium metal negative electrode, comprising the following steps:
S1: selecting a lithium salt and an organic solvent, and mixing same to obtain an electrolyte with a lithium salt concentration of 0.5 mol/L-5 mol/L;
S2: mixing 10-20 parts of a thickener and 30-80 parts of the electrolyte in parts by mass to obtain a viscous liquid A;
S3: adding 10-60 parts of a lithium powder to the viscous liquid A in S2 in parts by mass, and stirring and mixing same until uniform to obtain a pasty lithium paste; and
S4: uniformly coating the lithium paste on the side of a current collector to obtain the lithium metal negative electrode.

According to the technical solution described above, the preparation process of the lithium paste in the preparation method of the lithium metal negative electrode is carried out in two steps, i.e., first mixing an electrolyte and a thickener to obtain a viscous liquid A, and then mixing the viscous liquid A with a lithium powder, wherein during the mixing process after the lithium powder added to the viscous liquid A, the lithium powder particles are protected by the wrapping of the viscous liquid A, which has a buffering function for the collision between the lithium powder particles or between the lithium powder particles and the stirring apparatus, reducing the breakage risk of the lithium powder particles during the stirring and maintaining the integrity of lithium powder particles, and the viscous liquid A with a greater viscosity avoids the lithium powder particles to settle during mixing, such that the lithium powder is uniformly mixed in the lithium paste, and prevents the lithium paste from liquid separation and delamination.

The present invention is further provided as follow: the stirring process of S4 is performed in a vacuum environment with a vacuum pressure of 10-10⁻⁴ Pa.

According to the technical solution described above, the lithium powder is added to the viscous liquid A and then stirred such that to the viscous liquid A, gases are easily stirred and dissolved therein, and micro-bubbles and dissolved gases in the viscous liquid A are removed under vacuum, to avoid mixing micro-bubbles in the prepared lithium paste and avoid precipitation of micro-bubbles in the lithium paste layer during charging and discharging, thereby improving the film formability of the lithium paste and improving the lithium metal negative electrode of the present application and the performance of the lithium metal battery using the lithium metal negative electrode of the present application.

The present invention is further provided as follow: steps S1-S5 are all completed in a dry atmosphere, and the water dew point in the dry atmosphere is less than -10°C.

According to the technical solution described above, the lithium paste is prevented from being exposed to moisture during the preparation therefor, to avoid the water content in the lithium paste which will reduce the coulomb efficiency of the lithium metal battery and cause the potential safety hazard.

In view of the shortcomings of the prior art, a third object of the present invention is to provide a battery with a good charging-discharging cycle performance, and having characteristics of a high energy and a high power density.

The above technical object of the present invention is achieved by the following technical solution:
a lithium metal battery, which is a liquid or solid-state lithium metal battery, which includes the above lithium metal negative electrode.

In summary, the present invention has the following beneficial effects:
1. The lithium paste obtained by mixing lithium powder particles with a high specific surface area, a thickener, and an electrolyte is uniformly applied on the surface of the current collector material to form a lithium paste layer, in which the lithium powder particles serve as a electron-losing material during negative electrode discharging, the lithium powder particles are uniformly dispersed in the lithium paste by being wrapped by the thickener and electrolyte and the lithium powder particles have a high dispersion density, thus greatly improving the areal capacity and electron/ion reaction area of the lithium metal negative electrode, then improving the high energy performance of lithium metal batteries, which meet the requirements of lithium metal batteries for a high energy and a high power density.
2. The lithium powder particles are not fixed to each other, i.e., the lithium powder particles can be move adaptively in the lithium paste layer according to the distribution of the lithium powder particles and the size of the lithium powder particles, then increasing the lithium deposition site of the lithium metal negative electrode during charging of the lithium metal battery, and reducing the local current density of the lithium metal negative electrode, thereby reducing the growth rate of lithium dendrites, and therefore, the reduction of the coulombic efficiency is slowed down for the lithium metal negative electrode of the present application after long-term use, and the cycle efficiency and safety performance are improved for the lithium metal battery using the lithium metal negative electrode of the present application.
3. The lithium paste layer has a deformability, can be deformed during the cyclic charging and discharging of the lithium metal battery for buffering, so as to improve the cycle stability of the lithium metal negative electrode, and when applied in lithium metal solid-state batteries, the lithium paste layer can maintain a good contact with the solid electrolyte to improve the application effect of the lithium metal negative electrode of the present application in the lithium metal solid-state battery and facilitate the popularization and use of lithium metal solid-state batteries.
4. The lithium paste has a good fluidity, which improves the processability of the lithium paste, and the thickness of the lithium paste layer obtained by the coating thereof is small and controllable, which improves the production efficiency, reduces the production cost, and improves the mass energy density and volume energy density of the lithium metal battery using the lithium metal negative electrode of the present application.
5. The lithium powder particles themselves and thickener in the lithium paste have a certain liquid retention capacity for the electrolyte, which can ensure the electrolyte to wet and contact with the lithium metal during the storage process, prevent excessive absorption of the electrolyte by the lithium metal battery during long-term storage, promotes the uniform distribution of the electrolyte in the battery and improves the storage performance of the lithium metal battery.
6. The acquisition approach of the lithium paste in the preparation method of the lithium metal negative electrode is carried out in two steps, i.e., first mixing an electrolyte and a thickener to obtain a viscous liquid A, and then mixing the viscous liquid A with a lithium powder, so as to reduce the breaking rate of the lithium powder particles during the stirring, ensure that the lithium powder is uniformly mixed in the lithium paste, and prevent the lithium paste from liquid separation and delamination.
7. Using the lithium metal negative electrode of the present application, the lithium metal battery has a good cycle stability, a high energy density and a high power density.

### Detailed Description of Embodiments

**Example 1,**
a lithium metal negative electrode, which includes a current collector and a lithium paste layer covering the current collector.

The current collector is an inert conductive material, which can be determined according to actual conditions. Here, it is preferably a copper foil with a thickness of 8 µm.

The lithium paste layer is directly obtained by coating a pasty lithium paste, and the thickness of the lithium paste layer is 5-60 µm.

The lithium paste is formed by mixing the following raw materials in parts by mass:
10-60 parts of a lithium powder, 10-20 parts of a thickener, and 30-80 parts of an electrolyte.

The morphology of the lithium powder is granular, flake or needle-like, and the volume equivalent diameter thereof is 1-30 µm, that is, the maximum volume equivalent diameter of lithium powder particles is 30 µm.

The thickener is one or more of fumed silica, organic bentonite, a polyethylene wax, a polyamide wax or hydrogenated sesame oil.

The electrolyte is formulated by mixing a lithium salt and an organic solvent, wherein the concentration of the lithium salt is 0.5 mol/L-5 mol/L. The lithium salt is one or more of LiN(SO₂CF₃)₂ (abbreviated as LiTFSI), LiNO₃, LiAsF₆, LiPF₆, Lil, LiBF₄, LiClO₄, LiSO₂CF₃, and LiB(C₂O₄)₂ (abbreviated as LiBOB). The organic solvent is formulated from one or more of propylene carbonate (abbreviated as PC), ethylene carbonate (abbreviated as EC), fluoroethylene carbonate (abbreviated as FEC), diethyl carbonate (abbreviated as DEC), dimethyl carbonate (abbreviated as DMC), methyl ethyl carbonate (abbreviated as EMC), 1,3-dioxolane (abbreviated as DOL), ethylene glycol dimethyl ether (abbreviated as DME), dimethyl sulfoxide (abbreviated as DMSO), and tetrahydrofuran (abbreviated as THF).

The preparation method of the above lithium metal negative electrode, as follows:
S1: choosing one or more of LiTFSI, LiNO₃, LiAsF₆, LiPF₆, Lil, LiBF₄, LiClO₄, LiSO₂CF₃, and LiBOB as the lithium salt, choosing one or more of PC, EC, FEC, DEC, DMC EMC, DOL, DME, DMSO, and THF to formulate an organic solvent, and mixing the lithium salt and the organic solvent to formulate an electrolyte with a lithium salt concentration of 0.5 mol/L to 5 mol/L;
S2: mixing 10-20 parts of a thickener and 30-80 parts of the electrolyte in parts by mass to obtain a viscous liquid A;
S3: in a vacuum environment with a vacuum pressure of 10-10⁻⁴ Pa, adding 10-60 parts of a lithium powder to the viscous liquid A, and stirring and mixing same until uniform to obtain a pasty lithium paste; and
S4: uniformly coating the lithium paste on a current collector to obtain the lithium metal negative electrode.

The above steps S1-S4 are all completed in a dry atmosphere.

According to the above preparation method, the lithium metal negative electrodes of examples 1A-1F are obtained. The specific parameters are shown in Table 1.

**Table 1. Parameter table of lithium metal negative electrodes of examples 1A-1F.**

| | Example 1A | Example 1B | Example 1C | Example 1D | Example 1E | Example 1F |
|---|---|---|---|---|---|---|
| Lithium powder amount/g | 50 | 30 | 10 | 60 | 60 | 50 |
| Lithium powder volume equivalent diameter/µm | 5 | 10 | 15 | 30 | 20 | 1 |
| Thickener amount/q | 20 | 10 | 10 | 10 | 10 | 20 |
| Thickener components and the mass ratio thereof | Fumed silica | Organic bentonite | Organic bentonite : polyethylene wax = 1 : 1 | Hydrogenate d sesame oil : polyamide wax = 1 : 1 | Fumed silica : organic bentonite = 1 : 1 | Fumed silica |
| Electrolyte amount/g | 30 | 60 | 80 | 30 | 30 | 30 |
| Lithium salt concentration/mol. L ⁻¹ | 2 | 3 | 4 | 5 | 1 | 2 |
| Lithium salt composition and mass ratio | LiAsF₆ : LiTFSI = 1 : 1 | LiNO₃: LiP₆F = 0.5 : 1.0 | LiTf : LiP₆F=1 : 1 | LiClO₄ | LiAsF₆ : LiBOB : LiFP₆ = 1 : 1 : 0.8 | LiAsF₆ : LiTFSI = 1 : 1 |
| Organic solvent composition and mass ratio | EC : DMC=1 : 1 | PC : DEC = 0.5 : 1 | FEC : EC : DMC = 0.2 : 1 : 1 | DME : DOL = 1 : 1.2 | EC : DMC : DEC = 0.5 : 1 : 0.8 | EC : DMC = 1 : 1 |
| Vacuum pressure/Pa | 10 | 10⁻² | 10⁻¹ | 10 | 10⁻⁴ | 10⁻³ |
| Lithium paste layer thickness/µm | 20 | 40 | 50 | 60 | 60 | 5 |

**Example 2,**
a lithium metal negative electrode, the steps of the preparation method are the same as those in example 1, and the lithium metal negative electrodes of examples 1A-1F are obtained. The specific parameters are shown in Table 2.

**Table 2. Parameter table of lithium metal negative electrodes of examples 2A-2F.**

| | Example 2A | Example 2B | Example 2C | Example 2D | Example 2E | Example 2F |
|---|---|---|---|---|---|---|
| Lithium powder amount/q | 25 | 40 | 50 | 20 | 25 | 35 |
| Lithium powder volume equivalent diameter/µm | 1 | 10 | 10 | 15 | 25 | 10 |
| Thickener amount/q | 20 | 15 | 15 | 20 | 20 | 10 |
| Thickener components and the mass ratio thereof | Fumed silica | Fumed silica : ethylene wax = 1 : 1 | Organic bentonite : hydrogenated sesame oil = 1 : 1 | Polyethylene wax | Polyamide wax | Hydrogenated castor oil |
| Electrolyte amount/g | 30 | 50 | 70 | 60 | 40 | 55 |
| Lithium salt concentration/mol·L⁻¹ | 2 | 2.5 | 3.5 | 1.5 | 4.5 | 5 |
| Lithium salt composition and mass ratio | LiAsF₆ : LiTFSI = 1 : 1 | LiBF₄ : LiTf = 1 : 0.9 | LiBF₄ | Lil : LiTFSI = 1 : 1 | LiAsF₆ | LiBOB : LiTf = 1 : 0.7 |
| Organic solvent composition and mass ratio | EC : DMC = 1 : 1 | PC : EMC = 0.5 : 1 | DMC : DPL= 0.8 : 1 | EC : DMC = 1:1 | TDME : DMSO = 1 : 0.2 | EC : EMC = 1 : 1 |
| Vacuum pressure/Pa | 10 | 9 | 10⁻¹ | 5 | 3 | 9 |
| Lithium paste layer thickness/µm | 5 | 30 | 50 | 40 | 30 | 60 |

**Example 3,**
a lithium metal battery, which is a liquid-state lithium metal battery, including the lithium metal negative electrode of example 1. The preparation method of the lithium metal battery is as follows:
X1: To the lithium metal negative electrode obtained in example 1, on the side with the lithium paste layer, sequentially laminating and assembling a PE-PP-PE separator paper and the positive electrode to obtain a battery core; and
X2: assembling other components and a shell to obtain the lithium metal battery.

Thus, according to the lithium metal negative electrodes prepared under different parameters in examples 1A-1F, different lithium metal batteries are obtained. The specific parameters of examples 3A-3F are shown in Table 3.

**Table 3. Parameter table of lithium metal batteries of examples 3A-3F**

| | Example 3A | Example 3B | Example 3C | Example 3D | Example 3E | Example 3F |
|---|---|---|---|---|---|---|
| Use negative electrode | Example 1A | Example 1B | Example 1C | Example 1D | Example 1E | Example 1F |
| Use positive electrode | NCM positive electrode | NCA positive electrode | Lithium-rich manganese-based positive electrode | LiFePO4 positive electrode | NCM positive electrode | NCM positive electrode |

**Example 4,**
a lithium metal battery, which is a liquid-state lithium metal battery, including the lithium metal negative electrode of example 2. The preparation method of the lithium metal battery is as follows:
X1: attaching and laminating a solid electrolyte membrane and a positive electrode to the lithium metal negative electrode obtained in example 1 on the side with the lithium paste layer in order to obtain a battery cell;
X2: assembling other components and a shell to obtain the lithium metal battery.

The solid electrolyte is the prior art, here the solid electrolyte is formed into a thin film by means of methods of pressing, sintering or shaping, etc., and here it is an LLZO solid electrolyte film.

Thus, according to the lithium metal negative electrodes prepared under different parameters in examples 2A-2F, different lithium metal batteries are obtained. The specific parameters of examples 4A-4F are shown in Table 4.

**Table 4. Parameter table of lithium metal batteries of examples 4A-4F**

| | Example 4A | Example 4B | Example 4C | Example 4D | Example 4E | Example 4F |
|---|---|---|---|---|---|---|
| Use negative electrode | Example 2A | Example 2B | Example 2C | Example 2D | Example 2E | Example 2F |
| Use positive electrode | NCM positive electrode | NCM positive electrode | NCA positive electrode | Lithium-rich manganese-based positive electrode | LiFePO4 positive electrode | NCM positive electrode |

### Comparative example 1 and comparative example 2 are simultaneously arranged.

**Comparative example 1,**
a lithium metal battery, which is an existing liquid-state lithium metal battery. A copper foil with a thickness of 8 µm is used as the current collector, a lithium foil with a thickness of 100 µm is used as the negative electrode, and LiTFSI/EC-DMC is used as the electrolyte, same is assembled with the PE-PP-PE separator paper and the NCM positive electrode, followed by subsequent assembly to obtain the lithium metal battery of comparative example 1.

**Comparative Example 2,**
a lithium metal battery, and the preparation method therefor is as follows:
a lithium foil with a thickness of 100 µm is used as a negative electrode, and is attached to an LLZO solid-state electrolyte film and a copper foil with a thickness of 8 µm on the two sides of the lithium foil, then same is assembled with a NCM positive electrode, followed by subsequent assembly to obtain the lithium metal negative battery of comparative example 2.

The batteries obtained in example 3, example 4, comparative example 1 and comparative example 2 are tested using a battery tester (commercial product of Shenzhen Newwell Electronics Co., Ltd.), and the test results are shown in Table 5.

**Table 5. Table of battery performance test results obtained in example 3, example 4, comparative example 1 and comparative example 2**

| | | Example 3A | Example 3B | Example 3C | Example 3D | Example 3E | Example 3F | Comparative example I |
|---|---|---|---|---|---|---|---|---|
| Voltage range/V | Max | 4.35 | 4.35 | 4.75 | 4.1 | 4.3 | 4.35 | 4.35 |
| | Min | 3 | 3 | 2.5 | 2.5 | 3 | 3 | 3 |
| Under 1C charging and discharging | Battery energy density/Wh·kg ⁻¹ | 400 | 380 | 500 | 250 | 260 | 450 | 280 |
| | Average Coulomb efficiency% | 99.76 | 99.5 | 99.7 | 99.7 | 99.7 | 99.6 | 65 |
| | Cycle life/time | > 300 | > 300 | > 300 | > 300 | > 300 | > 300 | 60 |
| Highest stable current/C | | 3 | 2 | 2 | 2 | 2 | 4 | 0.5 |

| | | Example 4A | Example 4B | Example 4C | Example 4D | Example 4E | Example 4F | Comparative example II |
|---|---|---|---|---|---|---|---|---|
| Voltage range/V | Max | 4.35 | 4.35 | 4.75 | 4.1 | 4.35 | 4.35 | 4.35 |
| | Min | 3 | 3 | 3 | 2.5 | 2.5 | 3 | 3 |
| Under 1C charging and discharging | Battery energy density/Wh·kg ⁻¹ | 350 | 330 | 320 | 230 | 300 | 230 | 230 |
| | Average Coulomb efficiency% | 99.9 | 99.9 | 99.9 | 99.9 | 99.9 | 99.9 | 80 |
| | Cycle life/time | > 400 | > 400 | > 400 | > 400 | > 400 | > 400 | 120 |
| Highest stable current/C | | 2 | 2 | 2 | 2 | 2 | 2 | 1 |

Comparing the test results of comparative example 3 and comparative example 1, it can be seen that comparing the liquid-state lithium metal battery prepared by the lithium metal negative electrode of the present application with an existing liquid-state lithium metal battery using a lithium foil as the negative electrode, by adjusting the thickness of the lithium paste layer, the energy density of the lithium metal battery can be adjusted according to the design requirements, to obtain a lithium metal battery with a high energy density, and at the same time, comparing the lithium metal battery prepared in example 1 with the existing liquid lithium metal battery using lithium foil as the negative electrode, the coulombic efficiency, energy power and cycle stability thereof show a significant improvement.

Comparing the test results of example 4 and comparative example 2, it can be seen that comparing the solid-state lithium metal battery prepared by the lithium metal negative electrode of the present application with an existing solid-state lithium metal battery using a lithium foil as the negative electrode, since a solid electrolyte film is used in the solid-state lithium battery, the lithium metal negative electrode of the present application has a more obvious improvement effect on the energy density of the prepared lithium metal battery, and with regard to the existing solid lithium metal battery that uses a lithium foil as the negative electrode, the lithium metal negative electrode of the present application also shows a significant improvement in the coulombic efficiency, energy power and cycle stability of the prepared lithium metal battery.

**Example 5,**
a lithium metal battery, and on the basis of example 3A, the difference lies in the simultaneous addition and mixing of an electrolyte, a thickener and a lithium powder in a method for preparing a lithium metal negative electrode.

**Example 6,**
a lithium metal battery, and on the basis of example 3A, the difference lies in that the stirring process of S4 in a method for preparing a lithium metal negative electrode is performed under normal pressure.

**Comparative example 3,**
a lithium metal battery, and on the basis of example 3A, the difference lies in that the preparation process of a lithium metal negative electrode involves preparing in an environment with a relative humidity of 80%.

**Example 7,**
a lithium metal battery, and on the basis of example 3A, the difference lies in that the composition of the thickener is different. The specific composition parameters are shown in Table 6.

**Table 6. Parameter table of example 7**

| | Example 7A | Example 7B | Example 7C |
|---|---|---|---|
| Thickener | Hydroxypropyl methylcellulose | Sodium alginate | Xanthan gum |

The batteries obtained in examples 5 to 7 and comparative example 3 are tested using a battery tester (commercial product of Shenzhen Newwell Electronics Co., Ltd.), and the test results are shown in Table 7.

**Table 7. battery performance test results of example 5, example 6, example 7 and comparative example 3**

| | | Example 5 | Example 6 | Comparative example 3 | Example 7 | | |
|---|---|---|---|---|---|---|---|
| | | | | | Example 7A | Example 7B | Example 7C |
| Voltage range/V | Max | 4.35 | 4.35 | The battery being not working | 4.35 | 4.35 | 4.35 |
| | Min | 3 | 3 | | 3 | 3 | 3 |
| Under 1C charging and discharging | Battery energy density/Wh·kg ⁻¹ | 360 | 320 | | 285 | 265 | 305 |
| | Average Coulomb efficiency% | 90.6 | 86 | | 76 | 70 | 86 |
| | Cycle life/time | 280 | 265 | | 150 | 170 | 300 |
| Highest stable current/C | | 1.8 | 1.5 | | 1 | 1 | 1.5 |

Comparing the data of example 3A in Table 4 with the data of example 5 in Table 7, the battery energy density, average coulombic efficiency, cycle life, and highest stable current of example 3A are all better than those of example 5. This is because during the preparation of the lithium paste, first mixing an electrolyte with a thickener to obtain a viscous liquid A, and then mixing the viscous liquid A with the lithium powder to avoid the lithium powder particles to settle and agglomerate during mixing, and reduce the morphological damage of the lithium powder caused by stirring during mixing, and ensure that the lithium powder is uniformly mixed in the lithium paste. In addition, the electrolyte and the thickener are mixed first, which can facilitate the adjustment of the consistency of the lithium paste, prevent the lithium paste from liquid separation and delamination, improve the quality and stability of the lithium paste, and improve performances of the cycle stability, energy density and energy power of the lithium metal battery using the lithium metal negative electrode of example 3.

Comparing the data of example 3A in Table 4 with the data of example 6 in Table 7, the battery energy density, average Coulomb efficiency, and cycle life of example 3A are better than those of example 6. The lithium metal negative electrode is operated in a vacuum environment during the production, which reduces the amount of micro-bubbles and dissolved gas mixed in the lithium paste, and can improve performances of the cycle stability, energy density and energy power of the lithium metal battery using the lithium metal negative electrode of the present application.

In comparative example 3, a battery which is assembled using the lithium metal negative electrode prepared in a humid environment cannot be used. Therefore, the preparation of lithium paste in a dry atmosphere can avoid the lithium paste to be exposed to moisture, improve the manufacturing yield of the lithium metal battery of the present application, reduces the production of products and prevents potential safety hazards.

Comparing the data of example 3A in Table 4 and the data of example 7 in Table 7, the battery energy density, average coulombic efficiency, and cycle life of example 3A are better than those of example 7. In the present application, the thickener is selected from one or more of fumed silica, organic bentonite, a polyethylene wax, a polyamide wax or hydrogenated sesame oil, improving the consistency of the electrolyte, preventing the sedimentation of lithium particles, and preventing the lithium paste from liquid separation and delamination, while modifying the surface of lithium powder particles in situ to promote uniform dispersion of lithium powder particles in the lithium paste and improve the performance of the battery.

**Comparative example 4,**
a lithium metal battery, and on the basis of comparative example 2, the difference lies in that the thickness of the lithium foil as the negative electrode during the preparation process is different.

According to the above preparation method, lithium metal batteries are prepared by using lithium foils of different thicknesses to obtain comparative examples 4A-4E. The thickness of the lithium foil and the yield of the lithium negative electrode are shown in Table 8.

**Table 8. The production parameters of the lithium metal battery of comparative example 4 and the production product yield of the lithium metal negative electrode thereof.**

| | Comparative example 3A | Comparative example 3B | Comparative example 3C | Comparative example 3D | Comparative example 3E |
|---|---|---|---|---|---|
| Lithium foil thickness/µm | 5 | 10 | 50 | 100 | 200 |
| Lithium metal negative electrode finished product yield/% | 0 | 0 | 20 | 100 | 100 |

When the thickness of the lithium foil is less than 100 µm, the lithium foil thus obtained has an increased thickness deviation, and is difficult to assemble during assembly, and due to the activity and ductility of the lithium foil itself, the lithium foil itself is sticky and cannot be spread, and thus cannot be assembled to produce a lithium metal negative electrode.

From the lithium paste layer thickness in Table 1 and Table 2, and the test results of various lithium metal batteries in Table 5, it can be seen that a lithium paste is used as the lithium metal negative electrode of the present application, and has a feasibility of ultra-thin processing, and the lithium paste layer thickness can reach 5 µm and the prepared lithium metal battery can still improve the stable current output, and obtain more battery cell number, stacking times or winding times per unit mass or unit volume. The lithium metal negative electrode of the present application can be used to produce a lithium metal battery with characteristics of a high quality energy density and a high volume energy density.

## Claims

1. Lithium metal negative electrode, **characterized in that** it comprises a current collector and a layer of lithium paste covered on one side of the current collector, wherein the current collector is an inert conductive material, and the lithium paste is formed by the following raw materials in parts by mass in a mixture:
10-60 parts of a lithium powder with a volume equivalent diameter of 1-30 µm,
10-20 parts of a thickener selected from the group comprising one or more of fumed silica, organic bentonite, a polyethylene wax, a polyamide wax, hydrogenated castor oil, and 30-80 parts of an electrolyte containing 0.5 mol/L-5 mol/L of a lithium salt in an organic solvent selected from the group comprising one or more of propylene carbonate, ethylene carbonate, fluoroethylene carbonate, diethyl carbonate, dimethyl carbonate, methyl ethyl carbonate, 1,3-dioxolane, ethylene glycol dimethyl ether, dimethyl sulfoxide, and tetrahydrofuran, and the lithium salt is one or more of LiN(SO₂CF₃)₂, LiNO₃, LiAsF₆, LiPF₆, Lil, LiBF₄, LiClO₄, LiSO₂CF₃, and LiB(C₂O₄)₂.

2. Lithium metal negative electrode according to claim 1, **characterized in that** the thickness of the lithium paste layer is 5-60 µm.

3. Method for preparing the lithium metal negative electrode according to any one of claims 1-2, **characterized in that** it comprises the following steps:
S1: selecting a lithium salt and an organic solvent, wherein the organic solvent is selected from the group comprising one or more of propylene carbonate, ethylene carbonate,
fluoroethylene carbonate, diethyl carbonate, dimethyl carbonate, methyl ethyl carbonate, 1,3-dioxolane, ethylene glycol dimethyl ether, dimethyl sulfoxide, and tetrahydrofuran, and mixing the same to obtain an electrolyte with a lithium salt concentration of 0.5 mol/L-5 mol/L wherein the lithium salt is one or more of LiN(SO₂CF₃)₂, LiNO₃, LiAsF₆, LiPF₆, Lil, LiBF₄, LiClO₄, LiSO₂CF₃, and LiB(C₂O₄)₂;
S2: mixing 10-20 parts of a thickener selected from the group comprising one or more of fumed silica, organic bentonite, a polyethylene wax, a polyamide wax, hydrogenated castor oil and 30-80 parts of the electrolyte in parts by mass to obtain a viscous liquid A;
S3: adding 10-60 parts of a lithium powder to the viscous liquid A in S2 in parts by mass, and stirring and mixing the same until uniform to obtain a pasty lithium paste; and
S4: uniformly applying the lithium paste on the side of a current collector to obtain the lithium metal negative electrode.

4. Method according to claim 3, **characterized in that** the stirring process of S4 is performed in a vacuum environment with a vacuum pressure of 10-10⁻⁴ Pa.

5. Method according to claim 4, **characterized in that** steps S1-S5 are all completed in a dry atmosphere, and the water dew point in the dry atmosphere is less than -10°C.

6. Lithium battery, **characterized in that** it is a liquid or solid-state lithium metal battery, which comprises the lithium metal negative electrode according to any one of claims 1-2.

## Patentansprüche

1. Negativelektrode aus Lithiummetall, **dadurch gekennzeichnet, dass** sie einen Stromabnehmer und eine Schicht aus Lithiumpaste umfasst, die auf einer Seite des Stromabnehmers bedeckt ist, wobei der Stromabnehmer ein inertes leitfähiges Material ist, und die Lithiumpaste aus folgenden Rohstoffen in Massenteilen in einem Gemisch gebildet ist: 10-60 Teilen eines Lithiumpulvers mit einem Volumenäquivalentdurchmesser von 1-30 µm,
10-20 Teilen eines Verdickungsmittels, ausgewählt aus der Gruppe, die ein oder mehrere aus Rauchkieselsäure, organischem Bentonit, einem Polyethylenwachs, einem Polyamidwachs und hydriertem Rizinusöl umfasst, und
30-80 Teilen eines Elektrolyten, der 0,5 mol/l-5 mol/l eines Lithiumsalzes in einem organischen Lösungsmittel enthält, ausgewählt aus der Gruppe, die eines oder mehrere aus Propylencarbonat, Ethylencarbonat, Fluorethylencarbonat, Diethylcarbonat, Dimethylcarbonat, Methylethylcarbonat, 1,3-Dioxolan, Ethylenglycoldimethylether, Dimethylsulfoxid und Tetrahydrofuran umfasst, und das Lithiumsalz eines oder mehrere aus LiN(SO₂CF₃)₂, LiNO₃, LiAsF₆, LiPF₆, Lil, LiBF₄, LiClO₄, LiSO₂CF₃ und LiB(C₂O₄)₂ ist.

2. Negativelektrode aus Lithiummetall nach Anspruch 1, **dadurch gekennzeichnet, dass** die Schichtdicke der Lithiumpaste 5-60 µm beträgt.

3. Verfahren zur Vorbereitung der Negativelektrode aus Lithiummetall nach einem der Ansprüche 1-2, **dadurch gekennzeichnet, dass** es die folgenden Schritte umfasst:
S1: Auswählen eines Lithiumsalzes und eines organischen Lösungsmittels, wobei das organische Lösungsmittel aus der Gruppe ausgewählt ist, die eines oder mehrere aus Propylencarbonat, Ethylencarbonat, Fluorethylencarbonat, Diethylcarbonat, Dimethylcarbonat, Methylethylcarbonat, 1,3-Dioxolan, Ethylenglycoldimethylether, Dimethylsulfoxid und Tetrahydrofuran umfasst, und Mischen derselben, um einen Elektrolyten mit einer Lithiumsalzkonzentration von 0,5 mol/l-5 mol/l zu erhalten, wobei das Lithiumsalz eines oder mehrere aus LiN(SO₂CF₃)₂ LiNO₃, LiAsF₆, LiPF₆, Lil, LiBF₄, LiClO₄, LiSO₂CF₃ und LiB(C₂O₄)₂ ist;
S2: Mischen von 10-20 Teilen eines Verdickungsmittels, ausgewählt aus der Gruppe, die eines oder mehrere aus Rauchkieselsäure, organischem Bentonit, einem Polyethylenwachs, einem Polyamidwachs und hydriertem Rizinusöl umfasst, und 30-80 Teilen des Elektrolyten in Massenteilen, um eine viskose Flüssigkeit A zu erhalten;
S3: Hinzufügen von 10-60 Teilen eines Lithiumpulvers zu der viskosen Flüssigkeit A in S2 in Massenteilen, und Rühren und Mischen derselben, bis eine gleichmäßige, pastöse Lithiumpaste entsteht; und
S4: gleichmäßiges Auftragen der Lithiumpaste auf die Seite eines Stromabnehmers, um die Negativelektrode aus Lithiummetall zu erhalten.

4. Verfahren nach Anspruch 3, **dadurch gekennzeichnet, dass** der Rührvorgang von S4 in einer Vakuumumgebung mit einem Vakuumdruck von 10-10⁻⁴ Pa durchgeführt wird.

5. Verfahren nach Anspruch 4, **dadurch gekennzeichnet, dass** die Schritte S1-S5 alle in trockener Atmosphäre durchgeführt werden und der Wassertaupunkt in der trockenen Atmosphäre weniger als -10 °C beträgt.

6. Lithiumbatterie, **dadurch gekennzeichnet, dass** es sich um eine flüssige oder feste Lithiummetallbatterie handelt, die die negative Lithiummetallelektrode nach einem der Ansprüche 1-2 umfasst.

## Revendications

1. Électrode négative au lithium métallique, **caractérisée en ce qu'**elle comporte un collecteur de courant et une couche de pâte de lithium recouverte sur un côté du collecteur de courant, dans laquelle le collecteur de courant est un matériau conducteur inerte, et la pâte de lithium est formée par les matières premières suivantes en parties en masse dans un mélange : 10 à 60 parties d'une poudre de lithium ayant un diamètre équivalent en volume de 1 à 30 µm,
10 à 20 parties d'un épaississant sélectionné parmi le groupe comportant l'une ou plusieurs parmi la silice fumée, la bentonite organique, une cire de polyéthylène, une cire de polyamide, l'huile de ricin hydrogénée, et
30 à 80 parties d'un électrolyte contenant de 0,5 mol/L à 5 mol/L d'un sel de lithium dans un solvant organique sélectionné parmi le groupe comportant l'un ou plusieurs parmi le carbonate de propylène, le carbonate d'éthylène, le carbonate de fluoroéthylène, le carbonate de diéthyle, le carbonate de diméthyle, le carbonate de méthyle éthyle, le 1,3-dioxolane, l'éther diméthylique d'éthylène glycol, le diméthylsulfoxyde et le tétrahydrofurane, et le sel de lithium est l'un ou plusieurs parmi LiN(SO₂CF₃)₂, LiNO₃, LiAsF₆, LiPF₆, Lil, LiBF₄, LiClO₄, LiSO₂CF₃ et LiB(C₂O₄)₂.

2. Électrode négative au lithium métallique selon la revendication 1, **caractérisée en ce que** l'épaisseur de la couche de pâte de lithium est de 5 à 60 µm.

3. Procédé de préparation de l'électrode négative au lithium métallique selon l'une quelconque des revendications 1 à 2, **caractérisé en ce qu'**il comporte les étapes suivantes :
S1 : la sélection d'un sel de lithium et d'un solvant organique, dans lequel le solvant organique est sélectionné parmi le groupe comportant l'un ou plusieurs parmi le carbonate de propylène, le carbonate d'éthylène, le carbonate de fluoroéthylène, le carbonate de diéthyle, le carbonate de diméthyle, le carbonate de méthyle éthyle, le 1,3-dioxolane, l'éther diméthylique d'éthylène glycol, le diméthylsulfoxyde et le tétrahydrofurane, et le mélange de ceux-ci pour obtenir un électrolyte ayant une concentration en sel de lithium de 0,5 mol/L à 5 mol/L, dans lequel le sel de lithium est l'un ou plusieurs parmi LiN(SO₂CF₃)₂, LiNO₃, LiAsF₆, LiPF₆, Lil, LiBF₄, LiClO₄, LiSO₂CF₃ et LiB(C₂O₄)₂ ;
S2 : le mélange de 10 à 20 parties d'un épaississant sélectionné parmi le groupe comportant l'une ou plusieurs parmi la silice fumée, la bentonite organique, une cire de polyéthylène, une cire de polyamide, l'huile de ricin hydrogénée et de 30 à 80 parties de l'électrolyte en parties en masse pour obtenir un liquide visqueux A ;
S3 : l'ajout de 10 à 60 parties d'une poudre de lithium au liquide visqueux A à l'étape S2 en parties en masse, et l'agitation et le mélange de ceux-ci jusqu'à obtenir une pâte de lithium pâteuse ; et
S4 : l'application de manière uniforme de la pâte de lithium sur le côté d'un collecteur de courant pour obtenir l'électrode négative au lithium métallique.

4. Procédé selon la revendication 3, **caractérisé en ce que** le processus d'agitation de l'étape S4 est réalisé dans un environnement sous vide avec une pression de vide de 10 à 10⁻⁴ Pa.

5. Procédé selon la revendication 4, **caractérisé en ce que** les étapes S1 à S5 sont toutes achevées dans une atmosphère sèche, et le point de rosée de l'eau dans l'atmosphère sèche est inférieur à -10 °C.

6. Batterie au lithium, **caractérisée en ce qu'**elle est une batterie au lithium métallique liquide ou à l'état solide, qui comporte l'électrode négative au lithium métallique selon l'une quelconque des revendications 1 à 2.
